# EUROPEAN PATENT APPLICATION

(11) **EP 4 514 009 A1**
(43) Date of publication of application: **26.02.2025**
(21) Application number: 23802652.0
(22) Date of filing: 25.04.2023
(51) Int. Cl.: H04W 72/04

(54) **COMMUNICATION METHOD AND APPARATUS, AND STORAGE MEDIUM**

(30) Priority: 11.05.2022 CN 202210509867
(71) Applicant: Huawei Technologies Co., Ltd., Shenzhen, Guangdong 518129 (CN)
(72) Inventor: GAO, Kuandong, Shenzhen, Guangdong 518129 (CN); HUANG, Huang, Shenzhen, Guangdong 518129 (CN)
(74) Representative: Maiwald GmbH
(86) International application number: PCT/CN2023/090689
(87) International publication number: WO 2023/216878

(57) **Abstract**

This application discloses a communication method and apparatus, and a storage medium. The method includes: A terminal obtains first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The terminal obtains downlink control information, where the downlink control information includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource. According to the solutions in this application, a time domain resource can be accurately determined.

## Description

This application claims priority to Chinese Patent Application No. 202210509867.4, filed with the China National Intellectual Property Administration on May 11, 2022 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

A tone reservation (tone reservation, TR)-discrete Fourier transform (discrete Fourier transform, DFT)-s-orthogonal frequency division multiplexing (orthogonal frequency division multiplexing, OFDM) technology may be used to generate a signal for reducing a peak to average power ratio (peak to average power ratio, PAPR).

However, there is currently no corresponding solution of how to configure a time-frequency resource when a signal is sent by using the TR-DFT-s-OFDM technology.

### SUMMARY

This application provides a communication method and apparatus, and a storage medium, to accurately determine a time-frequency resource.

According to a first aspect, a communication method is provided. The method includes: A terminal obtains first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The terminal obtains downlink control information (downlink control information, DCI), where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In this aspect, the terminal receives the first signaling and the DCI, where the first signaling carries the first frequency domain parameter of the first time-frequency resource, and the DCI indicates the second frequency domain parameter of the first time-frequency resource, so that a time-frequency resource can be accurately determined.

According to a second aspect, a communication method is provided. The method includes: A network device sends first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The network device sends downlink control information DCI, where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In this aspect, the network device includes the first frequency domain parameter of the first time-frequency resource in the first signaling, and indicates the second frequency domain parameter of the first time-frequency resource by using the DCI, so that a terminal can accurately determine a time-frequency resource.

According to a third aspect, a communication apparatus is provided. The communication apparatus may implement the method in the first aspect. For example, the communication apparatus may be a terminal. The foregoing method may be implemented by software, hardware, or hardware executing corresponding software.

In a possible implementation, the apparatus includes a transceiver unit, and may further include a processing unit. The transceiver unit is configured to obtain first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The transceiver unit is further configured to obtain downlink control information DCI, where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

According to a fourth aspect, a communication apparatus is provided. The communication apparatus may implement the method in the second aspect. For example, the communication apparatus may be a network device. The foregoing method may be implemented by software, hardware, or hardware executing corresponding software.

In a possible implementation, the apparatus includes a transceiver unit, and may further include a processing unit. The transceiver unit is configured to send first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The transceiver unit is further configured to send downlink control information DCI, where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In another possible implementation, the communication apparatus includes a processor coupled to a memory, and the processor is configured to support the apparatus in performing a corresponding function in the foregoing communication method. The memory is configured to be coupled to the processor, and stores a computer program (or computer-executable instructions) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or a communication interface of another type. Optionally, the memory may be located inside the communication apparatus and integrated with the processor, or may be located outside the communication apparatus.

In still another possible implementation, the communication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is the transceiver circuit or the input/output interface.

When the communication apparatus is the chip, a sending unit may be an output unit, for example, an output circuit or a communication interface, and a receiving unit may be an input unit, for example, an input circuit or a communication interface. When the communication apparatus is the terminal, a sending unit may be a transmitter or a transmitter machine, and a receiving unit may be a receiver or a receiver machine.

With reference to any one of the first aspect to the fourth aspect, in a possible implementation, the first frequency domain parameter includes at least one of the following: a frequency-domain start position, a quantity of consecutive resource blocks, and a frequency-domain end position.

In this implementation, the first signaling carries at least one of the following of the first time-frequency resource: the frequency-domain start position, the quantity of consecutive resource blocks, and the frequency-domain end position, so that the terminal can accurately determine the first time-frequency resource.

With reference to any one of the first aspect to the fourth aspect, in another possible implementation, the second frequency domain parameter is related to at least one of the following of the first signal: a scheduled bandwidth, a modulation scheme, a coding scheme, and a modulation and coding scheme.

In this implementation, the second frequency domain parameter is related to at least one of the following of the first signal: the scheduled bandwidth, the modulation scheme, the coding scheme, and the modulation and coding scheme, so that the second frequency domain parameter of the first time-frequency resource can be implicitly determined, thereby reducing signaling overheads.

With reference to any one of the first aspect to the fourth aspect, in still another possible implementation, the second frequency domain parameter is determined based on a relationship between the scheduled bandwidth of the first signal and a specified threshold.

With reference to any one of the first aspect to the fourth aspect, in still another possible implementation, the second time-frequency resource is for carrying the first signal of the terminal, and the first signal includes at least one of the following: a data signal and a reference signal.

With reference to any one of the first aspect to the fourth aspect, in still another possible implementation, the first time-frequency resource is related to an identifier of the terminal.

In this implementation, the first time-frequency resource is related to the identifier of the terminal, so that a case in which a plurality of terminals send signals at a same frequency domain position, resulting in an excessively high power and affecting an adjacent band can be avoided.

With reference to any one of the first aspect to the fourth aspect, in still another possible implementation, the available frequency domain resource of the first time-frequency resource includes a first time-frequency resource or a first time-frequency resource group, and the DCI indicates whether the first time-frequency resource or the first time-frequency resource group is available, or the DCI indicates an index of an available first time-frequency resource or first time-frequency resource group, or the DCI indicates one of a plurality of bandwidth values, or the DCI indicates whether the frequency-domain start position is available for the first time-frequency resource or the first time-frequency resource group, or the DCI indicates an index of the frequency-domain start position of the first time-frequency resource or an index of a frequency-domain start position of the first time-frequency resource group.

With reference to any one of the first aspect to the fourth aspect, in still another possible implementation, a scheduling-free uplink resource, a random access channel resource, or a beam recovery resource is reused as the first time-frequency resource, and the reuse indicates that frequency domain positions of two resources are the same, and the time domain position of the first time-frequency resource is the same as a time domain position of the scheduling-free uplink resource, the random access channel resource, or the beam recovery resource.

In this implementation, the scheduling-free uplink resource, the random access channel resource, or the beam recovery resource is reused, so that resource utilization can be improved.

With reference to any one of the first aspect to the fourth aspect, in still another possible implementation, the DCI indicates at least one of the following of the scheduling-free uplink resource, the random access channel resource, or the beam recovery resource that is reused: a time range and a quantity of transmission times.

According to a fifth aspect, a communication system is provided. The communication system includes the communication apparatus according to the third aspect and the communication apparatus according to the fourth aspect.

According to a sixth aspect, a computer-readable storage medium is provided. The computer-readable storage medium stores a computer program or instructions, and when the program or the instructions are executed by a processor, the method according to the first aspect or the second aspect or any one of the implementations of the first aspect or the second aspect is performed.

According to a seventh aspect, a computer program product is provided. When the computer program product is executed on a computing device, the method according to the first aspect or the second aspect or any one of the implementations of the first aspect or the second aspect is performed.

According to an eighth aspect, a circuit is provided. The circuit is coupled to a memory, and the circuit is configured to perform the method according to the first aspect or the second aspect or any one of the implementations of the first aspect or the second aspect. The circuit may include a chip circuit.

### BRIEF DESCRIPTION OF DRAWINGS

FIG. 1 is a diagram of a peak-to-average ratio according to an embodiment of this application;
FIG. 2 is a diagram of a multi-carrier signal according to an embodiment of this application;
FIG. 3 is a block diagram of an implementation of a DFT-s-OFDM system according to an embodiment of this application;
FIG. 4 is a block diagram of an implementation of a TR-DFT-s-OFDM system according to an embodiment of this application;
FIG. 5 is a diagram of mapping a TR signal to a scheduled bandwidth of a terminal according to an embodiment of this application;
FIG. 6a is another diagram of mapping a TR signal to a scheduled bandwidth of a terminal according to an embodiment of this application;
FIG. 6b is still another diagram of mapping a TR signal to a scheduled bandwidth of a terminal according to an embodiment of this application;
FIG. 7 is still another diagram of mapping a TR signal to a scheduled bandwidth of a terminal according to an embodiment of this application;
FIG. 8 is a diagram of a structure of a communication system according to an embodiment of this application;
FIG. 9 is a schematic flowchart of a communication method according to an embodiment of this application;
FIG. 10 is a diagram of an example of a first time-frequency resource according to an embodiment of this application;
FIG. 11 is a diagram of an example of using a RACH resource as a first time-frequency resource according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

The following describes embodiments of this application with reference to the accompanying drawings in embodiments of this application.

Several concepts that may be used in this application are first described.

### PAPR

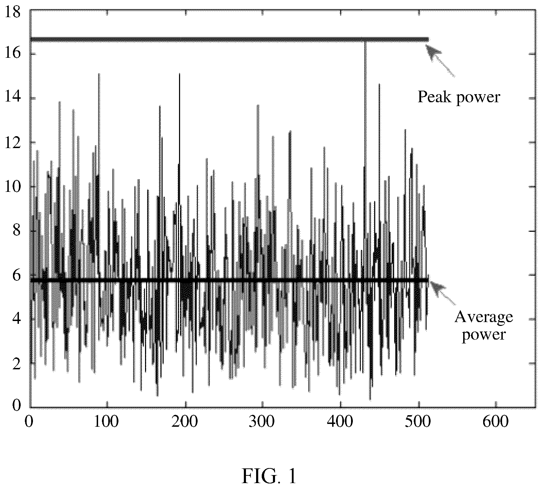

FIG. 1 is a diagram of a peak-to-average ratio according to an embodiment of this application. From a perspective of a time domain, a radio signal is a sine wave whose amplitude keeps changing, and the amplitude is not constant. A signal amplitude peak in one periodicity is different from an amplitude peak in another periodicity. Therefore, an average power and a peak power in each periodicity are different. A peak power (peak power) is a maximum transient power that occurs at a specific probability over a long period of time, and the probability is usually 0.01% (namely, 10^-4). At this probability, a ratio of the peak power to a total average power (average power) of a system is a peak-to-average ratio.

The peak-to-average ratio of the system is affected by the following two factors.
1. Peak-to-average ratio of a baseband signal. For example, a peak-to-average ratio of a baseband signal obtained through 1024QAM modulation is large, and a power of a baseband signal modulated by using quadrature phase shift keying (quadrature phase shift keying, QPSK) or binary phase shift keying (binary phase shift keying, BPSK) is 1. For the QPSK and the BPSK, it may be understood as that a signal amplitude is constant, and only a phase is changed.
2. Peak-to-average ratio introduced by multi-carrier power superposition

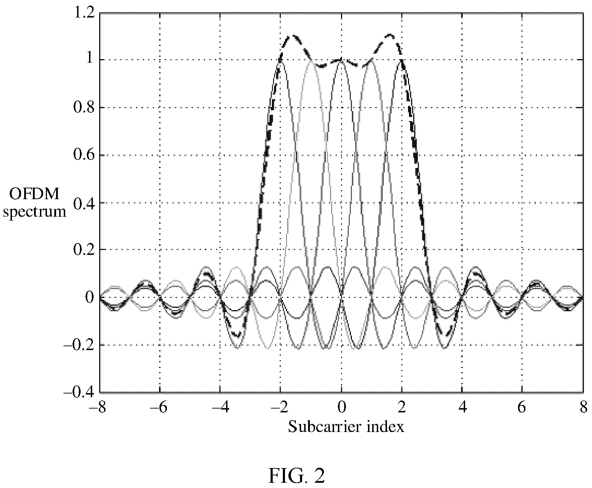

FIG. 2 is a diagram of a multi-carrier signal according to an embodiment of this application. A signal on a carrier is represented as a sinc function, and there is a tail on a left side and a right side. At a specific probability, tails of a plurality of carriers may be superposed at a distance to form a point with a large peak power.

### Harm of an excessively high PAPR

A signal of a wireless communication system needs to be amplified in power before being sent far away. Due to technical and cost limitations, a power amplifier usually performs linear amplification in only one range. If the range is exceeded, signal distortion is caused (this is similar to a microphone for singing, where the microphone can normally play a voice of a person when the person speaks normally, but the voice becomes strange and unpleasant when the person yells). The signal distortion causes a receive end to fail to correctly parse the signal. To ensure that the signal peak is still within the linear range of the power amplifier, an average power needs to be reduced. This leads to low efficiency of the power amplifier, or is equivalent to a smaller coverage area.

### Cyclic prefix-orthogonal frequency division multiplexing (cyclic prefix, CP-OFDM)

In the CP-OFDM, a modulation symbol obtained through modulation is mapped to a frequency domain subcarrier; then inverse Fourier transform is performed on the modulation symbol, to convert a frequency domain signal into a time domain signal; and then a cyclic prefix is added to obtain a to-be-sent signal.

Discrete Fourier transform spreading orthogonal frequency division multiplexing (discrete Fourier transform spreading OFDM, DFT-s-OFDM)
High frequencies (mainly including millimeter wave frequency bands such as 28G, 39G, 60G, and 73G) become a research and development hotspot in the industry due to rich frequency band resources, to meet increasing communication requirements. In addition to a large bandwidth and a highly integrated antenna array for achieving a high throughput, significant features of the high frequency further include a serious intermediate radio frequency distortion problem, such as a serious path loss, phase noise (phase noise, PHN), and a center frequency offset (carrier frequency offset, CFO). In addition, a Doppler frequency shift of the high frequency is greater. A phase error is introduced by each of the three. As a result, performance of a high-frequency communication system deteriorates or even the high-frequency communication system cannot work.

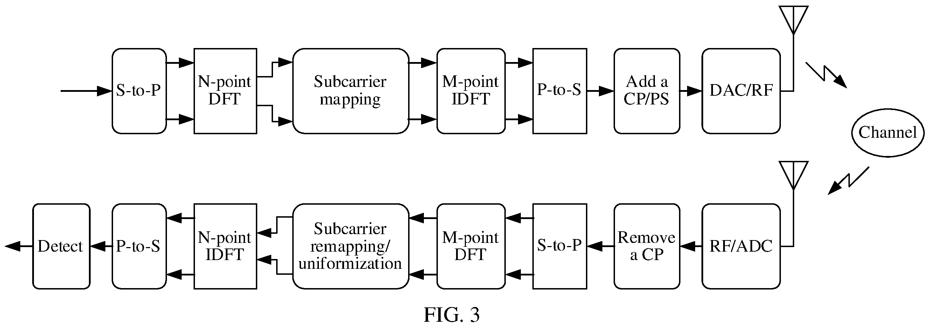

The DFT-s-OFDM is an LTE uplink signal generation manner, and is a variant of a CP-OFDM signal. FIG. 3 is a block diagram of an implementation of a DFT-s-OFDM system according to an embodiment of this application. After Fourier transform is performed on a specific quantity of modulation symbols to transform the modulation symbols to frequency domain, frequency domain signals are filtered or directly mapped to frequency domain subcarriers without being filtered, then inverse Fourier transform is performed to convert the frequency domain signal into a time domain signal, and a cyclic prefix is added to obtain a to-be-sent signal.

Because the DFT-s-OFDM includes additional discrete Fourier transform (discrete Fourier transform, DFT) processing (for example, N-point DFT (N-point DFT) in FIG. 3) before a conventional OFDM processing process, the DFT-s-OFDM is also referred to as a linear precoding OFDM technology.

The DFT-s-OFDM is essentially of a single carrier. In physical essence, a DFT-mapping-IFFT operation is actually equivalent to convolution performed on an input signal before DFT and a sinc waveform. Because the DFT-s-OFDM is essentially of the single carrier, compared with OFDM, a PAPR of the DFT-s-OFDM is lower, so that transmit efficiency of a terminal device can be improved, and battery use time can be prolonged, thereby reducing terminal costs.

Discrete Fourier transform spreading orthogonal frequency division multiplexing with frequency domain spectrum shaping (discrete Fourier transform spreading OFDM with FDSS, DFT-s-OFDM with FDSS)
In the DFT-s-OFDM with FDSS, additional spectrum replication is performed after DFT, and then a filter is used to multiply a signal obtained through the replication, to achieve frequency domain beamforming. Because the spectrum beamforming is performed, which is equivalent to that a waveform in time domain changes from a sinc waveform of DFT-s-OFDM to another waveform with a more limited time length or a lower sideband envelope, a PAPR of a DFT-s-OFDM waveform can be reduced. The DFT-s-OFDM with FDSS is an alternative waveform technology for future mobile communication (6G+) and a high-frequency scenario.

Compared with OFDM, DFT-s-OFDM and the DFT-s-OFDM with FDSS have lower PAPRs. However, when a modulation order of DFT-s-OFDM data is high, there is still a high PAPR, and the PAPR affects a maximum transmit power for sending a signal. To resolve this disadvantage, researchers propose many related technologies, and an effective one of the technologies is to reduce the PAPR by using a reserved tone.

Tone reservation-discrete Fourier transform spreading orthogonal frequency division multiplexing (tone reservation-discrete Fourier transform spreading OFDM, TR-DFT-s-OFDM)

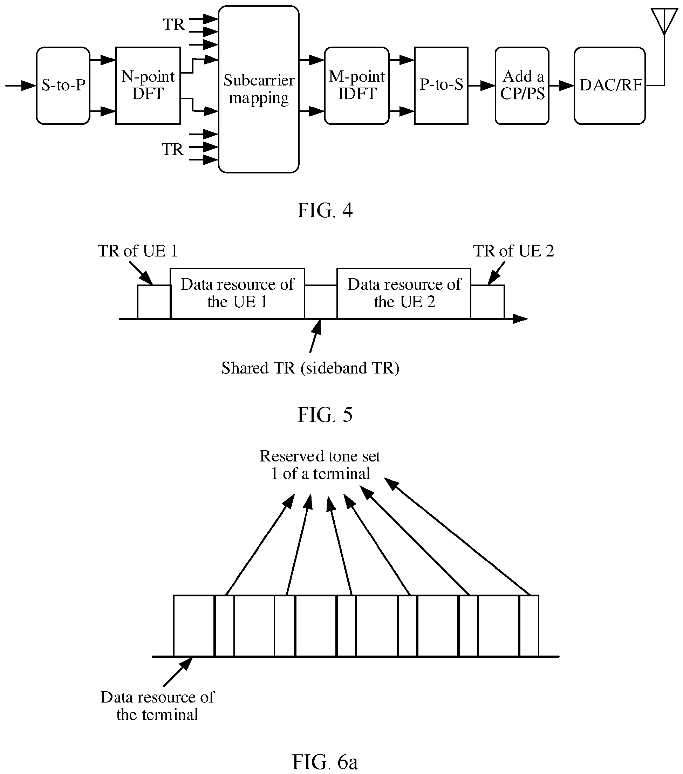

FIG. 4 is a block diagram of an implementation of a TR-DFT-s-OFDM system according to an embodiment of this application. It can be learned that a difference between this technology and DFT-s-OFDM lies in that, during subcarrier mapping, in addition to data generated through N-point DFT, another signal is also mapped to a scheduled bandwidth of a terminal. The signal is not for transmitting data, and a receive end only needs to demodulate the data mapped through the N-point DFT. A resource occupied by the another signal is referred to as a reserved tone in this application, or may be referred to as a peak reduction tone (peak reduction tone, PRT). The receive end does not need to learn of what is sent on a TR signal, and only needs to demodulate a signal of a bandwidth part (bandwidth part, BWP) occupied by the data. Therefore, from a perspective of the receive end, the resource occupied by the another signal may be considered as a reserved tone. However, from a perspective of a transmit end, a reserved tone is for reducing a PAPR. Therefore, a signal for reducing the PAPR may be generated based on a sent data signal, and a value of the signal is mapped to the TR, to obtain a reserved signal for reducing the PAPR.

The TR signal may be mapped to the scheduled bandwidth of the terminal in the following several implementations.

In an implementation, FIG. 5 is a diagram of mapping a TR signal to a scheduled bandwidth of a terminal according to an embodiment of this application. There is a reserved tone on two sides of each terminal to reduce a PAPR. When sidebands of two terminals overlap with each other, the sideband may be shared to reduce the PAPR.

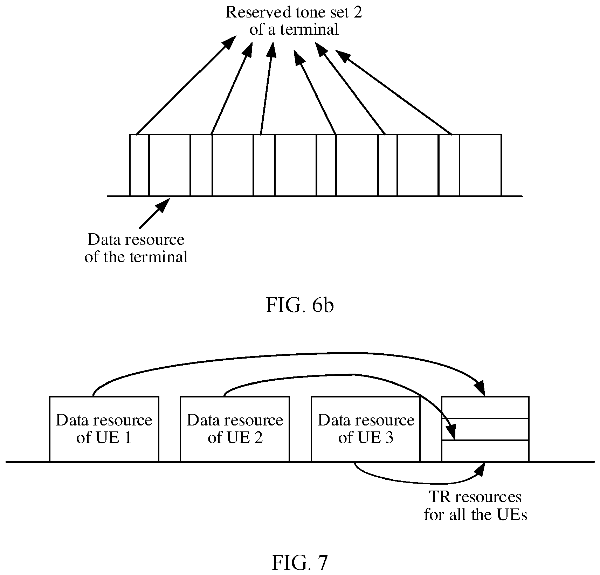

In another implementation, FIG. 6a and FIG. 6b are other diagrams of mapping a TR signal to a scheduled bandwidth of a terminal according to embodiments of this application. A reserved tone may be inserted into a frequency domain resource configured by a network device. Reserved tones placed in different frequency domain resource positions are collectively referred to as a reserved tone set (TR set). The network device or the terminal device sends an index of the reserved tone set to a receive end. The receive end obtains information about a frequency domain resource position of data based on the index, and demodulates the data. Therefore, in this solution, resource position information of a reserved tone of each transmit end needs to be learned of.

In still another implementation, FIG. 7 is still another diagram of mapping a TR signal to a scheduled bandwidth of a terminal according to an embodiment of this application. A plurality of terminals (for example, user equipment (user equipment, UE) 1, UE 3, and UE 3 in FIG. 7) share a segment of TR resources. In the manner of mapping the TR signal, utilization of spectrum resources can be improved, and the TR resource is jointly configured or indicated, so that signaling overheads can be reduced. However, a power of a frequency near the segment of TR resources increases, and non-linear distortion of a device affects signal receiving of an adjacent band. In FIG. 7, data of the UE 3 is affected by non-linear distortion of the TR resource. Therefore, a proper transmit power needs to be set for the TR resource.

For there being currently no corresponding solution of how to configure a time-frequency resource when a signal is sent by using a TR-DFT-s-OFDM technology in the background, this application provides a communication solution in which a first frequency domain parameter that is of a first time-frequency resource and that is included in first signaling is obtained, and a second frequency domain parameter that is of the first time-frequency resource and that is included in DCI is obtained, so that the first time-frequency resource can be accurately determined.

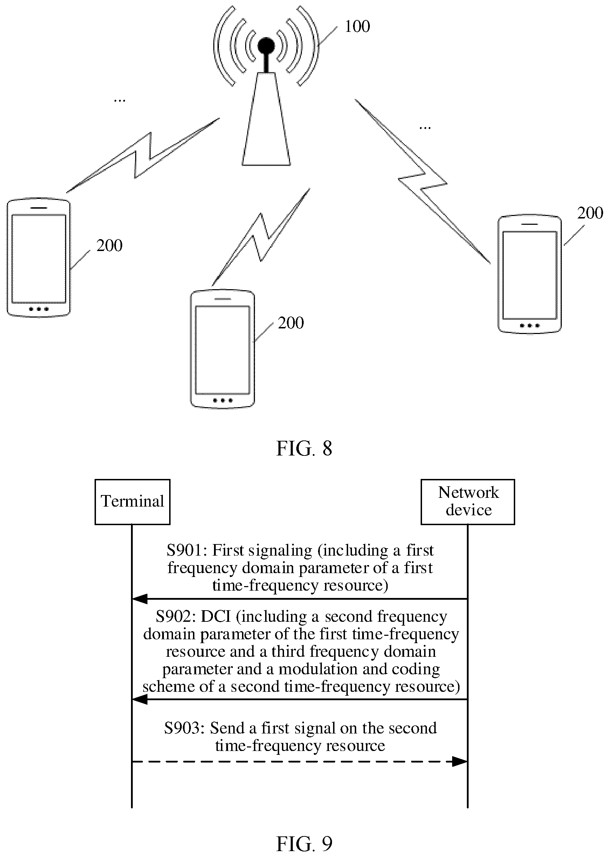

FIG. 8 is a diagram of a structure of a communication system according to an embodiment of this application. The communication system may include at least one network device 100 (only one is shown) and one or more terminals 200 connected to the network device 100.

The network device 100 may be a device that can communicate with the terminal 200. The network device 100 may be any device having a wireless transceiver function, and includes but is not limited to a NodeB NodeB, an evolved NodeB eNodeB, a base station in a 5th generation (5th generation, 5G) communication system, a base station or a network device in a future communication system, an access node in a Wi-Fi system, a wireless relay node, a wireless backhaul node, and the like. The network device 100 may alternatively be a radio controller in a cloud radio access network (cloud radio access network, CRAN) scenario. The network device 100 may alternatively be a small cell, a transmission node (transmission reference point, TRP), or the like. A specific technology and a specific device form that are used by the network device are not limited in embodiments of this application.

The terminal 200 is a device having a wireless transceiver function, and may be deployed on land, including an indoor or outdoor device, or a hand-held, wearable, or vehicle-mounted device; may be deployed on water, for example, on a ship; or may be deployed in air, for example, on an aircraft, a balloon, and a satellite. The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal sometimes may also be referred to as user equipment (user equipment, UE), an access terminal, a UE unit, a mobile station, a remote station, a remote terminal, a mobile device, a terminal (terminal), a wireless communication device, a UE agent, a UE apparatus, or the like.

It should be noted that the terms "system" and "network" in embodiments of this application may be used interchangeably.

All resource pools or first time-frequency resources in this application may be replaced with any one of the following parameters: a resource pool group, a first time-frequency resource group, a first time-frequency resource, and a resource pool.

Based on the communication system shown in FIG. 8, FIG. 9 is a schematic flowchart of a communication method according to an embodiment of this application. The method may include the following steps.

S901: The network device sends first signaling.

Correspondingly, the terminal obtains/receives the first signaling.

The first signaling includes a first frequency domain parameter of a first time-frequency resource. The first frequency domain parameter includes an available frequency domain resource of the first time-frequency resource. The available frequency domain resource includes one or more consecutive frequency domain resource blocks.

After receiving the first signaling, the terminal parses the first signaling to obtain the first frequency domain parameter carried in the first signaling.

For example, the first signaling may be any one of system information (system information, SI), radio resource control signaling (radio resource control, RRC) signaling, or a media access control control element (media access control control element, MAC-CE). The system information may be any piece of system information in a system information block (system information block, SIB) 1, a system information block 2, a system information block 3, a system information block 4, a system information block 5, a system information block 6, a system information block 7, a system information block 8, a system information block 9, a system information block 10, a system information block 11, a system information block 12, a system information block 13, a system information block 14, a system information block 15, a system information block 16, or a system information block 17, or may be system information in another system information block. This is not listed one by one herein. Alternatively, the system information may be system information in another form, for example, system information carried in a paging message or system information obtained by using RRC signaling. This is not limited herein.

The first frequency domain parameter may be configured by using the first signaling in the following several configuration manners.

In a configuration manner A, the first frequency domain parameter includes a frequency-domain start position and a quantity of consecutive resource blocks. For example, the first signaling is the SI. In this case, the frequency-domain start position and the quantity of consecutive resource blocks may be indicated by using the SI; or the frequency-domain start position may be indicated by using the SI, and the quantity of consecutive resource blocks may be indicated by using a MAC-CE. For example, the network device may configure one or more resource pools by using the first signaling, in other words, the first time-frequency resource includes the one or more resource pools. A granularity of the resource pool may be a resource element (resource element, RE), a physical resource block (physical resource block, PRB), a physical resource block group (physical resource block group, PRBG), or the like. Each resource pool is represented by using one frequency-domain start position and a quantity of N1 consecutive resource blocks. Different resource pools may completely or partially overlap.

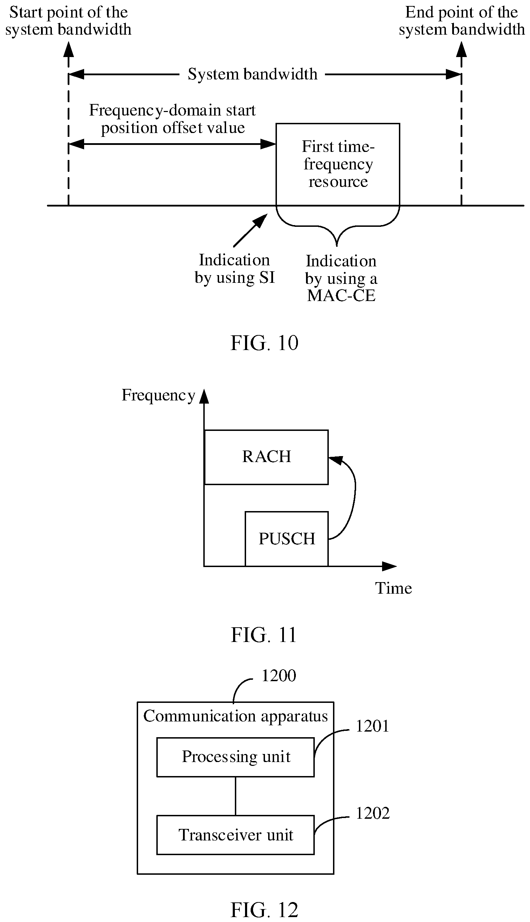

In an example, FIG. 10 is a diagram of an example of the first time-frequency resource according to an embodiment of this application. A start point (for example, a 0^{th} PRB) of a system bandwidth may be used as a reference point of a start point of the resource pool, and the start point of the resource pool has a frequency-domain start position offset value relative to the start point of the system bandwidth. For example, if the frequency-domain start position offset value is 10 PRBs, the start point of the resource pool is an 11^{th} PRB. In this example, the frequency-domain start position is indicated by using the SI, and the quantity of consecutive resource blocks is indicated by using the MAC-CE.

In another example, an end point (for example, a 100^{th} PRB) of a system bandwidth may be used as a reference point of a start point of the resource pool, and the start point of the resource pool has a frequency-domain start position offset value relative to the end point of the system bandwidth. For example, if the frequency-domain start position offset value is 10 PRBs, the start point of the resource pool is an 89^{th} PRB. The end point of the system bandwidth may be a last subcarrier of the system bandwidth, or the end point of the system bandwidth may be a last k^{th} subcarrier of the system bandwidth.

In still another example, a start point (for example, a 0^{th} PRB) of an initial uplink bandwidth part or an initial downlink bandwidth part (initial UL BWP and initial DL BWP) may be used as a reference point of a start point of the resource pool, and the start point of the resource pool has a frequency-domain start position offset value relative to the start point of the initial uplink bandwidth part or the initial downlink bandwidth part. For example, if the frequency-domain start position offset value is 10 PRBs, the start point of the resource pool is an 11^{th} PRB. The initial uplink bandwidth part or the initial downlink bandwidth part may be a default BWP, or the initial uplink bandwidth part or the initial downlink bandwidth part may be a BWP being used by the terminal (that is, a BWP in which the terminal is currently located). Alternatively, the terminal may select a resource pool in the BWP or a resource pool closest to the BWP as the first time-frequency resource.

In yet another example, an end point (for example, a 100^{th} PRB) of an initial uplink bandwidth part or an initial downlink bandwidth part may be used as a reference point of a start point of the resource pool, and the start point of the resource pool has a frequency-domain start position offset value relative to the end point of the initial uplink bandwidth part or the initial downlink bandwidth part. For example, if the frequency-domain start position offset value is 10 PRBs, the start point of the resource pool is an 89^{th} PRB.

Further, when configuring the reference point, the network device may configure a plurality of reference points. A part of the resource pools uses a start point as a reference point, and another part of the resource pools uses an end point as a reference point. For example, 10 resource pools are configured by using the first signaling. The start point of the system bandwidth is used as a reference point for 1^{st} to 5^{th} resource pools, and the end point of the system bandwidth is used as a reference point for 6^{th} to 10^{th} resource pools. For another example, 10 resource pools are configured by using the first signaling. The start point of the initial uplink bandwidth part or the initial downlink bandwidth part is used as a reference point for 1^{st} to 5^{th} resource pools, and the end point of the initial uplink bandwidth part or the initial downlink bandwidth part is used as a reference point for 6^{th} to 10^{th} resource pools. That the start point or the end point of the system bandwidth is used as the reference point may be indicated by using the first signaling or additional signaling, or that the start point or the end point of the initial uplink bandwidth part or the initial downlink bandwidth part is used as the reference point may be indicated by using the first signaling or additional signaling.

In a configuration manner B, the first frequency domain parameter includes a frequency-domain start position. It is assumed that the first time-frequency resource configured by the network device includes one or more resource pools. The first signaling may include frequency-domain start positions of the one or more resource pools. For a meaning and a specific implementation of the frequency-domain start position, refer to the foregoing configuration manner. A quantity of consecutive resource blocks of the first time-frequency resource may be indicated by using DCI.

In a configuration manner C, the first frequency domain parameter includes a frequency-domain end position and a quantity of consecutive resource blocks. For example, the first signaling is the SI. In this case, the frequency-domain end position and the quantity of consecutive resource blocks may be indicated by using the SI; or the frequency-domain end position may be indicated by using the SI, and the quantity of consecutive resource blocks may be indicated by using a MAC-CE. For example, the network device may configure one or more resource pools by using the first signaling, in other words, the first time-frequency resource includes the one or more resource pools. A granularity of the resource pool may be a resource element, a physical resource block, a physical resource block group, or the like. Each resource pool is represented by using one frequency-domain start position and a quantity of N1 consecutive resource blocks. Different resource pools may completely or partially overlap.

In a configuration manner D, the first frequency domain parameter includes a frequency-domain end position. It is assumed that the first time-frequency resource configured by the network device includes one or more resource pools. The first signaling may include frequency-domain end positions of the one or more resource pools. For a meaning and a specific implementation of the frequency-domain end position, refer to the foregoing configuration manner. A quantity of consecutive resource blocks of the first time-frequency resource may be indicated by using DCI.

Further, in an implementation, for the configuration manners, a plurality of first time-frequency resources may be grouped by using the first signaling. A first grouping manner is consecutive grouping, where K consecutive first time-frequency resources are grouped into one group, and frequency domain positions of the K consecutive first time-frequency resources may be adjacent or scattered. A second grouping manner is discrete grouping, where different indexes are selected as one group based on a sequence of the first time-frequency resources in frequency domain, which may be in ascending order or descending order. For example, in a grouping manner, an index of a group into which an ii^{th} first time-frequency resource is grouped may be k=ii mod Mz, where Mz is a quantity of groups, and mod indicates a modulo operation. A third grouping manner is grouping based on a bandwidth of the first time-frequency resource, where a maximum bandwidth is limited, and when a sum of bandwidths of K consecutive first time-frequency resources is greater than the maximum bandwidth, the K first time-frequency resources are grouped into one group, a next time-frequency resource of the K consecutive first time-frequency resources is grouped into a next group. The grouping manners herein are merely examples, and there may also be another grouping manner. This is not limited in the present invention. The network device may configure the grouping manner, or may agree on the grouping manner with the terminal device, or the terminal device may report the grouping manner. The network device sends the signaling according to the grouping manner, where the signaling includes a group index of the terminal device. Alternatively, the terminal device may determine a group index according to the grouping manner. For example, the terminal device determines an index k based on an identifier of the terminal device, for example, k=iUE mod Mz; or determines an index k based on a bandwidth allocated to data of the terminal device.

Further, in an implementation, a subcarrier spacing of the first time-frequency resource may be further configured by using SI, RRC, a MAC-CE, or DCI, to reduce interference between different subcarrier spacings.

In another implementation, a subcarrier spacing of the first time-frequency resource may alternatively be a largest one of subcarrier spacings of subcarriers of all carriers, or a largest subcarrier spacing of all BWPs.

In addition, the network device may alternatively configure the first frequency domain parameter of the first time-frequency resource by using common DCI. The common DCI may be common DCI of a plurality of terminals served by the network device, or common DCI of all terminals served by the network device. An independent search space periodicity or detection periodicity may be further configured for the common DCI, to avoid constant detection of the common DCI by the terminal.

S902: The network device sends downlink control information (downlink control information, DCI).

Correspondingly, the terminal obtains/receives the DCI.

The DCI is for scheduling uplink transmission of the terminal. The DCI includes a third frequency domain parameter and a modulation and coding scheme of a second time-frequency resource.

In addition, a second frequency domain parameter of the first time-frequency resource may be further explicitly or implicitly configured by using the DCI. Therefore, the DCI includes the second frequency domain parameter of the first time-frequency resource. Alternatively, the second frequency domain parameter may be explicitly or implicitly configured by using a MAC-CE.

The second frequency domain parameter is for determining, from the available frequency domain resource of the first time-frequency resource, an actual frequency domain resource of the first time-frequency resource or that no available frequency domain resource exists. For example, the first frequency domain parameter includes a part of frequency domain parameters of the first time-frequency resource, and the second frequency domain parameter includes a remaining part of the frequency domain parameters of the first time-frequency resource.

After receiving the DCI, the terminal parses the DCI to obtain the second frequency domain parameter, the third frequency domain parameter, and the modulation and coding scheme.

The third frequency domain parameter is for frequency domain resource allocation of the second time-frequency resource. For example, the third frequency domain parameter includes all frequency domain parameters of the second time-frequency resource.

When the first time-frequency resource exists, a time domain position of the first time-frequency resource is the same as a time domain position of the second time-frequency resource, and a frequency domain position of the first time-frequency resource is different from a frequency domain position of the second time-frequency resource. The terminal may determine the time domain position and the second frequency domain parameter of the first time-frequency resource based on the DCI.

That the time domain position of the first time-frequency resource is the same as the time domain position of the second time-frequency resource indicates that OFDM symbol indexes of the first time-frequency resource and the second time-frequency resource are the same, or OFDM symbol positions of the first time-frequency resource and the second time-frequency resource are the same. In other words, OFDM symbols scheduled on the first time-frequency resource and the second time-frequency resource are the same.

For example, the first time-frequency resource may be for carrying the foregoing TR signal.

The second time-frequency resource is for carrying a first signal of the terminal. The first signal includes at least one of the following: a data signal and a reference signal. The data signal includes at least one of the following: a data signal carried on a physical uplink shared channel (physical uplink shared channel, PUSCH), control information carried on a physical uplink control channel (physical uplink control channel, PUCCH), a preamble (preamble), and a random access message 3 (message 3, Msg3). The reference signal includes a sounding reference signal (sounding reference signal, SRS).

When the configuration manner A or the configuration manner C is used as a configuration manner of the first time-frequency resource, specific implementations of explicitly configuring the second frequency domain parameter of the first time-frequency resource by using the DCI are as follows.

In an implementation, one bit may be used for each resource pool to indicate whether the resource pool or a resource pool group is available. For example, one resource pool or resource pool group is configured by using the first signaling, and the DCI may indicate whether the resource pool or resource pool group is available. For example, when a value of the one bit is "1", it indicates that the resource pool or resource pool group is available; or when a value of the one bit is "0", it indicates that the resource pool or resource pool group is unavailable. For another example, when a value of the one bit is "0", it indicates that the resource pool or resource pool group is available; or when a value of the one bit is "1", it indicates that the resource pool or resource pool group is unavailable.

In another implementation, it is assumed that a plurality of resource pools or resource pool groups are configured by using the first signaling, and the DCI may indicate an index of an available resource pool or resource pool group. For example, the DCI indicates that an n1^{th} resource pool is used as the resource pool. An index (index) of the resource pool or resource pool group may be further associated with the identifier (UEID) of the terminal. One association manner is index=mod(UEID, N), where N is a quantity of resource pools or resource pool groups configured by using the first signaling. In this way, a case in which a plurality of terminals send signals at a same frequency domain position, resulting in an excessively high power and affecting an adjacent band can be avoided.

In still another implementation, alternatively, limited bandwidths of N first time-frequency resources may be configured by using the first signaling, and one of N bandwidth values is indicated by using the DCI or the MAC-CE.

When the configuration manner A or the configuration manner C is used as a configuration manner of the first time-frequency resource, a specific implementation of explicitly configuring the second frequency domain parameter of the first time-frequency resource by using the DCI is as follows.

The terminal may select a corresponding resource pool based on a scheduled bandwidth allocated by the network device. For example, a coefficient may be predefined in a protocol, and the terminal determines a bandwidth value based on the coefficient and a size of the allocated scheduled bandwidth. For example, the determined bandwidth value=BW*alpha, where BW represents the scheduled bandwidth, and alpha represents the coefficient. Then, the terminal determines, based on the determined bandwidth value, one of bandwidth values of the resource pool that is closest to the bandwidth value as the selected resource pool.

When a plurality of resource pools are selected based on the determined bandwidth value, one of the plurality of resource pools may be further selected with reference to UEID.

When the configuration manner B or the configuration manner D is used as a configuration manner of the first time-frequency resource, a specific implementation of explicitly configuring the second frequency domain parameter of the first time-frequency resource by using the DCI is as follows.

It is assumed that one or more frequency-domain start positions/frequency-domain end positions exist, and each frequency-domain start position/frequency-domain end position corresponds to one index. The first time-frequency resource configured by the network device includes one or more resource pools. For each resource pool, the DCI may indicate whether an n1^{th} frequency-domain start position/frequency-domain end position is available for the resource pool. In addition, whether the n1^{th} frequency-domain start position/frequency-domain end position is available for the resource pool may be alternatively indicated by using the MAC-CE. For a plurality of resource pools, the DCI may alternatively indicate whether an n1^{th} frequency-domain start position/frequency-domain end position is available for the plurality of resource pools. For example, the DCI includes one bit. When a value of the one bit is "1", it indicates that the frequency-domain start position/frequency-domain end position is available for the resource pools; and when a value of the one bit is "0", it indicates that the frequency-domain start position/frequency-domain end position is unavailable for the resource pools.

It is assumed that one or more frequency-domain start positions/frequency-domain end positions exist, and each frequency-domain start position/frequency-domain end position corresponds to one index. The first time-frequency resource configured by the network device includes one or more resource pools. For each resource pool, the DCI may indicate an index of a frequency-domain start position/frequency-domain end position. For example, the DCI indicates that an n1^{th} frequency-domain start position/frequency-domain end position is used as a frequency-domain start position/frequency-domain end position of the resource pool. Further, the index (index) of the frequency-domain start position/frequency-domain end position may be associated with UEID. For example, an association manner is index=mod(UEID, N), where N is a quantity of frequency-domain start positions/frequency-domain end positions. In this way, a case in which a plurality of terminals send signals at a same frequency domain position, resulting in an excessively high power and affecting an adjacent band can be avoided.

In addition, the quantity of consecutive resource blocks of the first time-frequency resource may be further indicated by using the DCI or the MAC-CE.

When the configuration manner B or the configuration manner D is used as a configuration manner of the first time-frequency resource, specific implementations of implicitly configuring the second frequency domain parameter of the first time-frequency resource by using the DCI are as follows.

In the configuration manner B or the configuration manner D, the bandwidth of the first time-frequency resource may be related to a scheduled bandwidth of the first signal.

In an implementation, when the scheduled bandwidth of the first signal is greater than a first threshold N_{RB0} and less than or equal to a second threshold N_{RB1}, the bandwidth of the first time-frequency resource is a times the scheduled bandwidth of the first signal. For example, if the scheduled bandwidth of the first signal includes m RBs, the bandwidth of the first time-frequency resource includes a*m RBs, for example, N1 to N2 RBs.

Specifically, BWTR=mod(f(BW_{data}*a), N2)*N2, where a is a factor less than 1, BW_{data} is the scheduled bandwidth of the first signal, BWTR is the bandwidth of the first time-frequency resource, f represents a rounding operation, for example, a rounding up operation, a rounding down operation, or a rounding off operation, and N2 is a granularity of the bandwidth of the first time-frequency resource, for example, one RB, in other words, 12 subcarriers are used as the granularity.

When the scheduled bandwidth of the first signal is less than or equal to the first threshold N_{RB0}, the bandwidth of the first time-frequency resource is a bandwidth configured by using SI or RRC, for example, N0 RBs.

In another implementation, when the scheduled bandwidth of the first signal is greater than a second threshold N_{RB0} and less than or equal to a third threshold N_{RB2}, a range of a bandwidth configured by using SI or RRC is N3 to N4 RBs, or a bandwidth configured by using SI or RRC is N3 RBs. When N3 is not equal to N4, a bandwidth of a value from N3 to N4 may be indicated by using DCI signaling. Herein, N_{RB0} and N_{RB1} are merely examples, and there may be more sizes of the scheduled bandwidth, for example, N_{RB2} and N_{RB3}. This is not limited herein.

When the scheduled bandwidth of the first signal is greater than the third threshold N_{RB2}, the bandwidth of the first time-frequency resource is a bandwidth configured by using SI or RRC, for example, N5 RBs.

A relationship between the scheduled bandwidth and the bandwidth of the first time-frequency resource in the implementations may be configured by using the RRC signaling or the SI, for example, as shown in Table 1.

**Table 1 Relationship between a scheduled bandwidth and a bandwidth of a first time-frequency resource**

| Scheduled bandwidth | Bandwidth of the first time-frequency resource |
|---|---|
| N_{RB}≤N_{RB0} | N0 |
| N_{RB0}<N_{RB}≤N_{RB1} | N1~N2 |
| N_{RB1}<N_{RB}≤N_{RB2} | N3 ~ N4 |
| N_{RB2}<N_{RB} | N5 |

In still another implementation, the network device indicates a ratio of the bandwidth of the first time-frequency resource to the bandwidth of the first signal, and the ratio may be b. The indication may be performed by using DCI, RRC, SI, or a MAC-CE, or may be specified in a protocol. In this case, the bandwidth of the first time-frequency resource is BWTR=mod(f(BW_{data}*b), N2)*N2. BW_{data} is the scheduled bandwidth of the first signal, BWTR is the bandwidth of the first time-frequency resource, f represents a rounding operation, for example, a rounding up operation, a rounding down operation, or a rounding off operation, and N2 is a granularity of the bandwidth of the first time-frequency resource, for example, one RB, in other words, 12 subcarriers are used as the granularity.

In yet another implementation, the bandwidth of the first time-frequency resource is related to a modulation scheme of the first signal. In a related manner, there are different Tables 1 in different modulation schemes. In a second related manner, there are different first thresholds N_{RB0} in different modulation schemes. In a third related manner, there are different values of a or b in different modulation schemes.

In still yet another implementation, the network device may indicate the bandwidth of the first time-frequency resource by using DCI signaling. When the network device directly indicates the bandwidth of the first time-frequency resource, different values may be indicated according to different modulation schemes.

In this embodiment, being configured by using the RRC signaling or the SI may also be replaced with being agreed on by the terminal and the network device.

Alternatively, the bandwidth of the first time-frequency resource may be related to at least one of the following of the first signal: a coding scheme and a modulation and coding scheme.

In the implementations, the network device does not need to indicate the second frequency domain parameter of the first time-frequency resource by using the DCI, so that signaling overheads can be reduced.

For example, when the first signal is a demodulation reference signal (demodulation reference signal, DMRS), in other words, when the first time-frequency resource is for reducing a PAPR of the DMRS, the first time-frequency resource may have a same frequency domain position as the DMRS, and the time domain position of the first time-frequency resource is the same as a time domain position of the DMRS.

For example, when the first signal is a control signal on a PUCCH, in other words, when the first time-frequency resource is for reducing a PAPR of the signal on the PUCCH, the frequency domain position of the first time-frequency resource may be configured by using RRC, a MAC-CE, or SI, and the time domain position of the first time-frequency resource is the same as a time domain position of the signal on the PUCCH.

For example, when the first signal is an SRS, in other words, when the first time-frequency resource is for reducing a PAPR of the SRS, the frequency domain position and the bandwidth of the first time-frequency resource may be configured by using RRC. When the SRS is activated, the TR signal is valid. When the SRS is not activated, the TR signal is invalid. For a grant-free (grant-free) (also referred to as scheduling-free) first time-frequency resource, the frequency domain position and the bandwidth of the first time-frequency resource may be configured by using RRC, and the frequency domain position and the bandwidth of the first time-frequency resource may be updated by using DCI. For example, in a time range in which the SRS is activated, the frequency domain position and the bandwidth of the first time-frequency resource may be fixed.

For example, when the first signal is a signal on a random access channel (random access channel, RACH), in other words, when the first time-frequency resource is for reducing a PAPR of the signal on the RACH, the frequency domain position of the first time-frequency resource may be configured by using RRC, a MAC-CE, or SI, and the time domain position of the first time-frequency resource is the same as a time domain position of the signal on the RACH. When a plurality of frequency domain resource pools or frequency domain resource positions are configured as the first time-frequency resource, indexes (indexes) of different random access preambles may be associated with different resource pools or frequency domain resource positions. An association manner is index=mod(RACHID, N), where N is a quantity of frequency-domain start position offset values of the first time-frequency resource or a quantity of resource pools.

Optionally, the method may further include the following steps (represented by dashed lines in the figure).

S903: The terminal sends the first signal on the second time-frequency resource.

The terminal may further send the TR signal on the first time-frequency resource.

The TR signal is sent, so that the PAPR of the first signal can be reduced.

Correspondingly, the network device receives the first signal and the TR signal. The network device does not need to learn of what is sent on the TR signal, and only needs to demodulate the first signal on the second time-frequency resource.

It should be noted that when a subcarrier of the first time-frequency resource collides with a subcarrier of the first signal, the subcarrier of the first signal is invalid on the subcarrier of the first time-frequency resource, in other words, the terminal does not send the first signal on the subcarrier or skips the subcarrier.

According to the communication method provided in this embodiment of this application, the first frequency domain parameter of the first time-frequency resource included in the first signaling is obtained, and the second frequency domain parameter of the first time-frequency resource included in the DCI is obtained, so that the first time-frequency resource can be accurately determined.

In another embodiment, alternatively, another resource may be reused as the first time-frequency resource for transmission. A reused resource is a scheduling-free uplink resource, a RACH resource, or a beam recovery resource. The reuse indicates that frequency domain positions of two resources are the same, and the time domain position of the first time-frequency resource is the same as a time domain position of the scheduling-free uplink resource, the random access channel resource, or the beam recovery resource.

When the terminal cannot correctly transmit the first signal by using a scheduling-free resource, the terminal switches to first signal transmission by using a grant-based (grant-based) resource, and the original scheduling-free resource may be used as the first time-frequency resource.

When time of the grant-based resource is the same as scheduling time of a grant-free resource, the grant-free resource may be used as the first time-frequency resource. The network device may configure, by using RRC, a MAC-CE, or DCI, a time range or a quantity of transmission times of an available grant-free resource. Alternatively, an available grant-free bandwidth may be configured.

To avoid affecting receiving of signaling on the grant-free resource, it may be configured or directly indicated that, when a value of a modulation and coding scheme (modulation and coding scheme, MCS) of the grant-free resource is greater than a specific value, the grant-free resource cannot be used as the first time-frequency resource; and when the MCS of the grant-free resource is less than the specific value, the grant-free resource may be used as the first time-frequency resource.

FIG. 11 is a diagram in which a RACH resource is used as the first time-frequency resource. When time of the RACH resource is the same as time of a scheduled resource for uplink transmission, a resource of a random access preamble may be used as the first time-frequency resource, and a signal on the first time-frequency resource is for reducing a PAPR of a PUSCH or a PUCCH.

The network device or the terminal configures, by using RRC, a MAC-CE, or DCI, a time range or a quantity of transmission times of an available RACH resource. Alternatively, a bandwidth of an available RACH resource, an index of the RACH resource in frequency domain, or a quantity of RACH resources and the index of the RACH resource in frequency domain may be configured.

The network device may alternatively configure whether the terminal can perform transmission by using the first time-frequency resource.

The network device may alternatively configure or indicate whether a grant-free resource, a RACH resource, or a beam recovery resource can be used as the first time-frequency resource. The beam recovery resource may be a PUCCH resource for recovering a beam, or may be a RACH resource for recovering a beam. In addition, the network device may indicate an available resource type of the first time-frequency resource, for example, indicate that a resource type of the first time-frequency resource is one of a grant-free resource or a RACH resource. For example, 1-bit information may be used to indicate whether a resource can be used for TR transmission. For example, when a value of the one bit is "1", it indicates that a grant-free resource may be used as the first time-frequency resource; and when a value of the one bit is "0", it indicates that a RACH resource may be used as the first time-frequency resource. For example, the configuration or the indication may be performed by using RRC signaling, MAC-CE signaling, DCI signaling, or system information. The indication in the present invention may also be replaced with inclusion.

A same first time-frequency resource may be configured for a plurality of first signals. For example, first time-frequency resources for reducing PAPRs of signals on a PUCCH and a PUSCH may have a same frequency domain position and/or bandwidth. For another example, first time-frequency resources for reducing PAPRs of signals on a random access preamble, a message 3, and/or a part of a PUSCH may have a same frequency domain position and/or bandwidth. For still another example, first time-frequency resources for reducing PAPRs of signals on a message 3 and/or a part of a PUSCH may have a same frequency domain position and/or bandwidth.

For example, the network device may configure, by using RRC or system information, a same frequency domain position and/or bandwidth for first time-frequency resources for reducing PAPRs of a part or all of uplink signals.

For example, the network device may configure, by using RRC or system information, a plurality of same frequency domain positions and/or bandwidths for first time-frequency resources for reducing PAPRs of a part or all of uplink signals.

For example, the network device may configure, by using RRC or system information, a plurality of same resource pools for first time-frequency resources for reducing PAPRs of a part or all of uplink signals.

It may be understood that, to implement the functions in the foregoing embodiments, the terminal and the network device include corresponding hardware structures and/or software modules for performing the functions. A person skilled in the art should be easily aware that, with reference to the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

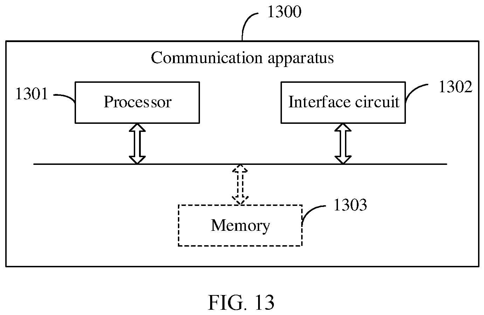

FIG. 12 and FIG. 13 are diagrams of structures of possible communication apparatuses according to embodiments of this application. These communication apparatuses may be configured to implement the functions of the terminal or the network device in the foregoing method embodiments. Therefore, the beneficial effects of the foregoing method embodiments can also be implemented.

FIG. 12 is a diagram of a structure of a communication apparatus according to an embodiment of this application. The communication apparatus 1200 includes a processing unit 1201 and a transceiver unit 1202.

When the communication apparatus 1200 is configured to implement the functions of the terminal in the foregoing method embodiment, the transceiver unit 1202 is configured to obtain first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The transceiver unit 1202 is further configured to obtain downlink control information DCI, where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

When the communication apparatus 1200 is configured to implement the functions of the network device in the foregoing method embodiment, the transceiver unit 1202 is configured to send first signaling, where the first signaling includes a first frequency domain parameter of a first time-frequency resource, the first frequency domain parameter includes an available frequency domain resource of the first time-frequency resource, and the available frequency domain resource includes one or more consecutive frequency domain resource blocks. The transceiver unit 1202 is further configured to send downlink control information DCI, where the DCI includes a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

FIG. 13 is a diagram of a structure of another communication apparatus according to an embodiment of this application. The communication apparatus 1300 includes a processor 1301 and an interface circuit 1302. The processor 1301 and the interface circuit 1302 are coupled to each other. It may be understood that the interface circuit 1302 may be a transceiver or an input/output interface. Optionally, the communication apparatus 1300 may further include a memory 1303, configured to store instructions executed by the processor 1301, store input data needed by the processor 1301 to run the instructions, or store data generated after the processor 1301 runs the instructions.

When the communication apparatus 1300 is configured to implement the method shown in FIG. 9, the processor 1301 is configured to implement a function of the foregoing processing unit 1201, and the interface circuit 1302 is configured to implement the functions of the foregoing transceiver unit 1202.

When the communication apparatus is a chip used in a terminal, the node chip implements the functions of the terminal in the foregoing method embodiment. The node chip receives information from another module (for example, a radio frequency module or an antenna) in the terminal, where the information is sent by another node or other UE to the terminal. Alternatively, the node chip sends information to another module (for example, a radio frequency module or an antenna) in the terminal, where the information is sent by the terminal to another node or other UE.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a first node. Certainly, the processor and the storage medium may alternatively exist as discrete components in the terminal.

An embodiment of this application further provides a communication system, including the foregoing communication apparatuses.

An embodiment of this application further provides a computer-readable storage medium. The computer-readable storage medium stores a computer program or instructions. When the program or the instructions are executed by a processor, the method in the foregoing embodiment is performed.

An embodiment of this application further provides a computer program product. When the computer program product is executed on a computing device, the method in the foregoing embodiment is performed.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or the functions in embodiments of this application are performed. The computer may be a general-purpose computer, a dedicated computer, a computer network, a network device, a terminal, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In the formula in this application, the character "/" indicates a "division" relationship between the associated objects.

It may be understood that various numbers in embodiments of this application are only used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A communication method, wherein the method comprises:
obtaining, by a terminal, first signaling, wherein the first signaling comprises a first frequency domain parameter of a first time-frequency resource, the first frequency domain parameter comprises an available frequency domain resource of the first time-frequency resource, and the available frequency domain resource comprises one or more consecutive frequency domain resource blocks; and
obtaining, by the terminal, downlink control information DCI, wherein the DCI comprises a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource, wherein
when the first time-frequency resource exists, a time domain position of the first time-frequency resource is the same as a time domain position of the second time-frequency resource, and a frequency domain position of the first time-frequency resource is different from a frequency domain position of the second time-frequency resource.

2. A communication method, wherein the method comprises:
sending, by a network device, first signaling, wherein the first signaling comprises a first frequency domain parameter of a first time-frequency resource, the first frequency domain parameter comprises an available frequency domain resource of the first time-frequency resource, and the available frequency domain resource comprises one or more consecutive frequency domain resource blocks; and
sending, by the network device, downlink control information DCI, wherein the DCI comprises a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource, wherein
when the first time-frequency resource exists, a time domain position of the first time-frequency resource is the same as a time domain position of the second time-frequency resource, and a frequency domain position of the first time-frequency resource is different from a frequency domain position of the second time-frequency resource.

3. The method according to claim 1 or 2, wherein the first frequency domain parameter comprises at least one of the following: a frequency-domain start position, a quantity of consecutive resource blocks, and a frequency-domain end position.

4. The method according to any one of claims 1 to 3, wherein the second frequency domain parameter is related to at least one of the following of a first signal: a scheduled bandwidth, a modulation scheme, a coding scheme, and a modulation and coding scheme.

5. The method according to any one of claims 1 to 4, wherein the second frequency domain parameter is determined based on a relationship between the scheduled bandwidth of the first signal and a specified threshold.

6. The method according to any one of claims 1 to 5, wherein the second time-frequency resource is for carrying the first signal of the terminal, and the first signal comprises at least one of the following: a data signal and a reference signal.

7. The method according to any one of claims 1 to 6, wherein the first time-frequency resource is related to an identifier of the terminal.

8. The method according to any one of claims 1 to 7, wherein the available frequency domain resource of the first time-frequency resource comprises a first time-frequency resource or a first time-frequency resource group, and the DCI indicates whether the first time-frequency resource or the first time-frequency resource group is available, or the DCI indicates an index of an available first time-frequency resource or first time-frequency resource group, or the DCI indicates one of a plurality of bandwidth values, or the DCI indicates whether the frequency-domain start position is available for the first time-frequency resource or the first time-frequency resource group, or the DCI indicates an index of the frequency-domain start position of the first time-frequency resource or an index of a frequency-domain start position of the first time-frequency resource group.

9. The method according to any one of claims 1 to 8, wherein a scheduling-free uplink resource, a random access channel resource, or a beam recovery resource is reused as the first time-frequency resource, and the reuse indicates that frequency domain positions of two resources are the same, and the time domain position of the first time-frequency resource is the same as a time domain position of the scheduling-free uplink resource, the random access channel resource, or the beam recovery resource.

10. The method according to claim 9, wherein the DCI indicates at least one of the following of the scheduling-free uplink resource, the random access channel resource, or the beam recovery resource that is reused: a time range and a quantity of transmission times.

11. A communication apparatus, wherein the apparatus comprises:
a transceiver unit, configured to obtain first signaling, wherein the first signaling comprises a first frequency domain parameter of a first time-frequency resource, the first frequency domain parameter comprises an available frequency domain resource of the first time-frequency resource, and the available frequency domain resource comprises one or more consecutive frequency domain resource blocks, wherein
the transceiver unit is further configured to obtain downlink control information DCI, wherein the DCI comprises a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource, wherein
when the first time-frequency resource exists, a time domain position of the first time-frequency resource is the same as a time domain position of the second time-frequency resource, and a frequency domain position of the first time-frequency resource is different from a frequency domain position of the second time-frequency resource.

12. A communication apparatus, wherein the apparatus comprises:
a transceiver unit, configured to send first signaling, wherein the first signaling comprises a first frequency domain parameter of a first time-frequency resource, the first frequency domain parameter comprises an available frequency domain resource of the first time-frequency resource, and the available frequency domain resource comprises one or more consecutive frequency domain resource blocks, wherein
the transceiver unit is further configured to send downlink control information DCI, wherein the DCI comprises a second frequency domain parameter of the first time-frequency resource and a third frequency domain parameter and a modulation and coding scheme of a second time-frequency resource, the second frequency domain parameter is for determining, from the available frequency domain resource of the first time-frequency resource, an actual frequency domain resource of the first time-frequency resource or that no available frequency domain resource exists, and the third frequency domain parameter is for frequency domain resource allocation of the second time-frequency resource, wherein
when the first time-frequency resource exists, a time domain position of the first time-frequency resource is the same as a time domain position of the second time-frequency resource, and a frequency domain position of the first time-frequency resource is different from a frequency domain position of the second time-frequency resource.

13. The apparatus according to claim 11 or 12, wherein the first frequency domain parameter comprises at least one of the following: a frequency-domain start position, a quantity of consecutive resource blocks, and a frequency-domain end position.

14. The apparatus according to any one of claims 11 to 13, wherein the second frequency domain parameter is related to at least one of the following of a first signal: a scheduled bandwidth, a modulation scheme, a coding scheme, and a modulation and coding scheme.

15. The apparatus according to any one of claims 11 to 14, wherein the second frequency domain parameter is determined based on a relationship between the scheduled bandwidth of the first signal and a specified threshold.

16. The apparatus according to any one of claims 11 to 15, wherein the second time-frequency resource is for carrying the first signal of the terminal, and the first signal comprises at least one of the following: a data signal and a reference signal.

17. The apparatus according to any one of claims 11 to 16, wherein the first time-frequency resource is related to an identifier of the terminal.

18. The apparatus according to any one of claims 11 to 17, wherein the available frequency domain resource of the first time-frequency resource comprises a first time-frequency resource or a first time-frequency resource group, and the DCI indicates whether the first time-frequency resource or the first time-frequency resource group is available, or the DCI indicates an index of an available first time-frequency resource or first time-frequency resource group, or the DCI indicates one of a plurality of bandwidth values, or the DCI indicates whether the frequency-domain start position is available for the first time-frequency resource or the first time-frequency resource group, or the DCI indicates an index of the frequency-domain start position of the first time-frequency resource or an index of a frequency-domain start position of the first time-frequency resource group.

19. The apparatus according to any one of claims 11 to 18, wherein a scheduling-free uplink resource, a random access channel resource, or a beam recovery resource is reused as the first time-frequency resource, and the reuse indicates that frequency domain positions of two resources are the same, and the time domain position of the first time-frequency resource is the same as a time domain position of the scheduling-free uplink resource, the random access channel resource, or the beam recovery resource.

20. The apparatus according to claim 19, wherein the DCI indicates at least one of the following of the scheduling-free uplink resource, the random access channel resource, or the beam recovery resource that is reused: a time range and a quantity of transmission times.

21. A communication apparatus, comprising a processor, configured to execute a program stored in a memory, wherein when the program is executed, the apparatus is enabled to perform the method according to any one of claims 1 to 10.

22. A communication apparatus, comprising a logic circuit and an input/output interface, wherein
the input/output interface is configured to input first signaling and downlink control information; and
the logic circuit is configured to perform the method according to any one of claims 1 to 10.

23. A computer-readable storage medium, wherein the computer-readable storage medium stores a computer program, and when the computer program is executed by a processor, the method according to any one of claims 1 to 10 is implemented.

24. A computer program product, configured to perform, when executed on a computing device, the method according to any one of claims 1 to 10.
